## Europäisches Patentamt
## European Patent Office
## Office européen des brevets

(19)

(11) Numéro de publication: **0 012 258 B1**

(12)

# FASCICULE DE BREVET EUROPEEN

(45) Date de publication du fascicule du brevet: **01.12.82**

(51) Int. Cl.³: **F 16 L 3/16, G 21 C 9/04**

(21) Numéro de dépôt: **79104666.7**

(22) Date de dépôt: **23.11.79**

(54) **Dispositif de supportage ou de fixation de tuyauterie.**

(30) Priorité: **30.11.78 FR 7833887**

(43) Date de publication de la demande:
**25.06.80 Bulletin 80/13**

(45) Mention de la délivrance du brevet:
**01.12.82 Bulletin 82/48**

(84) Etats contractants désignés:
**BE CH DE FR GB IT SE**

(56) Documents cités:
**CH - A - 403 660**
**DE - C - 603 358**
**FR - A - 1 330 642**
**FR - A - 2 317 583**
**GB - A - 1 048 249**
**US - A - 2 630 835**

(73) Titulaire: **STEIN INDUSTRIE Société anonyme dite:**
**19-21, Avenue Morane Saulnier B.P. 74**
**F-78141 Velizy-Villacoublay (FR)**

(72) Inventeur: **Pouderoux, Pierre**
**12, Avenue de Celle**
**F-92360 Meudon la Foret (FR)**
Inventeur: **Marsault, Jean-Jacques**
**23, rue des Corps Saints**
**F-78730 Saint-Arnoult-en-Yvelines (FR)**
Inventeur: **Devoucoux, Pierre**
**50, rue des Nouvelles**
**F-92150 Suresnes (FR)**
Inventeur: **Roger, Gérard**
**L'Hermitage**
**F-78790 Hargeville (FR)**

(74) Mandataire: **Weinmiller, Jürgen et al,**
**Zeppelinstrasse 63**
**D-8000 München 80 (DE)**

Courier Press, Leamington Spa, England.

## Dispositif de supportage ou de fixation de tuyauterie

La présente invention concerne un dispositif permettant le supportage ou la fixation de tuyauteries d'épaisseur faible par rapport à leur diamètre et soumises à des variations de température importantes, ou/et devant être protégées contre les secousses sismiques, comportant des pièces de liaison entre la tuyauterie et un support externe.

Les dispositifs de support connus consistent en des colliers en deux parties de diamètre légèrement supérieur au diamètre extérieur de la tuyauterie, et en une couronne d'amiante disposée entre le collier et la tuyauterie, et serrée contre celle-ci par le collier. Ceux-ci ne conviennent cependant plus lorsque les tuyauteries sont d'épaisseur faible par rapport à leur diamètre et sont soumises à des variations de température importants, les fluide qui s'y écoule pouvant avoir des températures assez variables. En effet, les tuyauteries minces ont tendance à s'affaisser entre les supports, et les dilatations et contractions thermiques peuvent amener une désolidarisation de la tuyauterie de son collier. Si l'on voulait empêcher les déformations de la tuyauterie, il faudrail multiplier le nombre de dispositifs de support, ce qui serait coûteux et incommode en cas d'intervention sur la tuyauterie. Par ailleurs, la tuyauterie ne serait pas protégée des secousses sismiques.

Le brevet US 2 630 835 montre un dispositif de supportage ou de fixation de tuyauteries soumises à des variations de température importantes, comprenant une tuyauterie externe entourant un tuyau interne, avec un espace libre entre les deux, où s'engagent des pièces de connexion serrées sur le tuyau extérieur à l'aide de vis. Ce dispositif ne permet pas une déformation importante de la tuyauterie.

La présente invention a pour but de procurer un dispositif de supportage de tuyauterie qui en assure le maintien tout en lui procurant un certain jeu évitant les déformations à la suite de dilatations et contractions thermiques, et la protège dans une large mesure de l'effet des secousses sismiques, tout en étant de structure relativement simple et facile à monter ou démonter.

Le dispositif de supportage selon l'invention est caractérisé en ce qu'il comporte:

— un collier en qualité de support externe entourant la tuyauterie et espacé de celle-ci, et percé de trous en au moins deux points symétriquement disposés sur son pourtour,
— des taquets soudés sur la tuyauterie au centre desdits trous du collier et recevant lesdites pièces de liaison,
— des lames flexibles soudées d'un côté sur les pièces de liaison et d'un autre côté sur des pièces solidaires du collier.

Il comporte en outre de préférence au moins l'une des caractéristiques suivantes:

— Les taquets sont des pièces cylindriques soudées à une de leurs extrémités à la tuyauterie et munies d'un alésage dans lequel s'engage la pièce de liaison également cylindrique.
— L'alésage des taquets est taraudé et les pièces de liaison sont filetées de façon à se visser dans l'alésage.
— La lame flexible est rectangulaire et comporte en son centre un trou circulaire, sur le pourtour duquel elle est soudée à la pièce de liaison.

Il est décrit ci-après, à titre d'exemple et en référence aux figures du dessin annexé, un dispositif de supportage pour tuyauterie de métal fondu dans une centrale de production d'électricité, selon l'invention.

La figure 1 représente ce dispositif de supportage en coupe diamétrale.

La figure 2 représente le même dispositif en élévation, avec arrachement partiel du calorifuge de la tuyauterie.

La figure 3 représente à plus grande échelle le détail III de la figure 1, sur lequel on voit de façon plus précise la structure du dispositif de support.

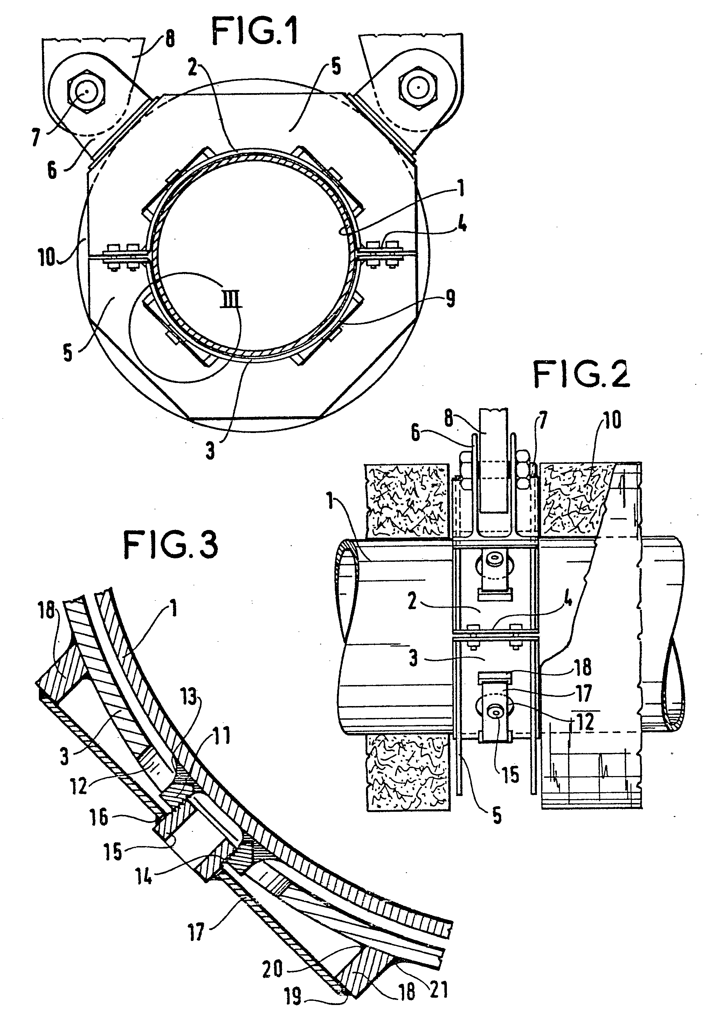

Dans la vue de la figure 1, la tuyauterie 1 de grand diamètre et à paroi mince, par exemple d'un diamètre de 700 à 1000 mm et d'épaisseur de paroi 10 à 20 mm, est soutenue par un collier end deux parties, une partie supérieure 2 et une partie inférieure 3, reliées par des ailettes latérales 4 assemblées l'une à l'autre par vis et écrous. Le diamètre interne du collier est réglable par insertion de cales appropriées entre les ailettes 4, de façon à maintenir un jeu radial de 3 à 5 mm entre le pourtour de la tuyauterie et le collier. Le collier comporte latéralement des voiles raidisseurs 5. Il est suspendu à des pattes 6, fixées par des boulons 7 à des bras de suspension 8 éventuellement à amortisseurs. La liaison entre la tuyauterie et le collier est assurée par quatre organes 9, régulièrement espacés sur son pourtour, et dont la structure va être décrite en détail à propos de la figure 3. De la manière habituelle, la tuyauterie est entourée d'un calorifuge 10.

Comme on le voit sur la figure 3, des taquets cylindriques 11 sont soudés sur la tuyauterie au centre de trous 12 du collier, par des cordons de soudure 13. Chaque taquet comporte un alésage central taraudé 14, dans lequel s'engage une pièce de liaison cylindrique 15, filetée sur son pourtour de façon à se visser dans le taquet. La pièce est soudée en 16 sur le pourtour d'un trou central d'une lame flexible rectangulaire 17. La lame 17 est elle-même fixée à ses extrémités à des barrettes 18 par des cordons de soudure 19. Les barrettes sont fixées sur le collier 2 ou 3 par des cordons de soudure 20, 21.

On voit que si la tuyauterie vient à se dilater ou à se contracter radialement par suite d'un changement de température du fluide qui s'y écoule, elle ne transmet pas directement d'effort au collier, la dilatation ou la contraction étant absorbées par la flexibilité de la lame 17. Par ailleurs, les efforts de reprise de poids sur la tuyauterie se traduisent par des cisaillements tangentiels donnant une distribution favorable des contraintes dans la tuyauterie et limitant son ovalisation. Enfin, les seules pièces soudées sur la tuyauterie, les taquets, sont de faible volume et présentent une inertie thermique très faible, ce qui évite le maintien pendant un temps appréciable de gradients de température sur la tuyauterie et les déformations concomitantes.

Le montage du collier sur la tuyauterie s'effectue de préférence comme suit. On soude en premier lieu taquets 11 sur la tuyauterie. On apporte les demi-colliers 2, 3 sur lesquels on a préalablement soudé les barrettes 18, et auquel on adjoint les voiles raidisseurs 5. On accoste sur la tuyauterie, on met en place le collier en réglant son écartement à l'aide de cales disposées entre les ailettes 4. On visse sur les taquets les pièces de liaison 15. Puis on solidarise le tube et le collier par mise en place des lames flexibles 17, qu'on enfile sur les pièces de liaison. On soude alors les lames flexibles, d'une part sur les pièces de liaison, d'autre part sur les barrettes. Puis on met en place les supports 6. Un tel montage peut s'effectuer aussi bien en usine qu'en chantier.

Le nombre de pièces de liaison avec la lame flexible entre la tuyauterie et le collier peut être inférieur (au minimum deux) ou supérieur à quatre.

Le dispositif de support de l'invention convient plus particulièrement aux tuyauteries de métal fondu dont la température peut varier dans une mesure importante, mais il s'applique de manière générale à toutes tuyauteries de grand diamètre et de faible épaisseur parcourues par un fluide de grande capacité calorifique, ainsi qu'aux tuyauteries destinées à être implantées dans un site exposé aux secousses sismiques.

**Revendications**

1. Dispositif permettant le supportage ou la fixation de tuyauteries (1) d'épaisseur faible par rapport à leur diamètre et soumises à des variations de température importantes, et/ou devant être protégées contre les secousses sismiques, comportant des pièces de liaison (15) entre la tuyauterie (1) et un support externe, dispositif caractérisé en ce qu'il comporte également:

— un collier (2, 3) en qualité de support externe entourant la tuyauterie (1) et espacé de celle-ci et percé ce trous (12) en au moins deux points symétriquement disposés sur son pourtour,

— des taquets (11) soudés sur la tuyauterie (1) au centre desdits trous (12) du collier (2, 3) et recevant lesdits pièces de liaison (15),

— des lames flexibles (17) soudées d'un côté sur les pièces de liaison (15) et d'un autre côté sur des pièces (18) solidaires du collier (2, 3).

2. Dispositif selon la revendication 1, caractérisé en ce que les taquets (11) sont des pièces cylindriques soudées à une de leurs extrémités à la tuyauterie (1) et munies d'un alésage (14) dans lequel s'engage la pièce de liaison (15) également cylindrique.

3. Dispositif selon la revendication 2, caractérisé en ce que l'alésage (14) des taquets (11) est taraudé et en ce que les pièces de liaison (15) sont filetées de façon à se visser dans l'alésage.

4. Dispositif selon l'une des revendications 1 à 3, caractérisé en ce que la lame flexible (17) est rectangulaire et comporte en son centre un trou circulaire, sur le pourtour duquel elle est soudée (16) à la pièce de liaison (15).

**Claims**

1. A device permitting the support or the fixing of pipes (1) of a thickness small in proportion to their diameter and being subjected to important temperature variations and/or having to be protected against earthquakes, comprising connection parts (15) between the pipe (1) and the external support, device characterized in that it further comprises

— a collar (2, 3) serving as external support, surrounding the pipe (1), spaced apart therefrom and pierced with holes (12) in at least two points spaced symmetrically on the periphery of said collar,

— fittings (11) welded on the pipe (1) in the centre of said holes (12) of the collar (2, 3) and receiving said connection parts (15),

— flexible strips (17) welded on the one hand to the connection parts (15) and on the other hand to parts (18) which are integral with the collar (2, 3).

2. Device according to Claim 1, characterized in that the fittings (11) are cylindrical parts welded at one of their ends to the pipe (1) and having a bore (14) into which the connection part (15), equally cylindrical, is inserted.

3. Device according to Claim 2, characterized in that the bore (14) of the fittings (11) is threaded and that the connection parts (15) are threaded so that they can be screwed into the bores.

4. Device according to one of the Claims 1 to 3, characterized in that the flexible strip (17) is rectangular and comprises in its centre a circular hole on the periphery (16) of which it is welded to the connection part (15).

## Patentansprüche

1. Vorrichtung, die die Unterstützung oder die Befestigung von Rohren (1) erlaubt, deren Dicke gering im Verhältnis zu ihrem Durchmesser ist und die großen Temperaturschwankungen ausgesetzt sind und/oder gegen Erdbebenstöße geschützt werden müssen, wobei die Vorrichtung Verbindungsstücke (15) zwischen dem Rohr (1) und einer äußeren Halterung aufweist, dadurch gekennzeichnet, daß sie außerdem aufweist

— eine Manschette (2, 3) als äußere Halterung, die das Rohr (1) umgibt, zu diesem einem Abstand aufweist und an mindestens zwei symmetrisch auf ihrem Umfang angeordneten Punkten mit Löchern (12) versehen ist,

— Zapfen (11), die auf das Rohr (1) in der Mitte der Löcher (12) der Manschette (2, 3) aufgeschweißt sind und die Verbindungsstücke (15) aufnehmen,

— biegsame Platten (17), die einerseits auf die Verbundungsstücke (15) und andererseits auf fest mit der Manschette (2, 3) verbundene Teile (18) aufgeschweißt sind.

2. Vorrichtung nach Anspruch 1, dadurch gekennzeichnet, daß die Zapfen (11) zylindrische Stücke sind, die an einem ihrer Enden an das Rohr (1) angeschweißt und mit einer Aushöhlung (14) versehen sind, in die das ebenfalls zylindrische Verbindungsstück (15) eingreift.

3. Vorrichtung nach Anspruch 2, dadurch gekennzeichnet, daß die Aushöhlung (14) der Zapfen (11) ein Innengewinde aufweist und daß die Verbindungsstücke (15) mit einem Gewinde versehen sind, so daß sie in die Aushöhlung geschraubt werden können.

FIG.1

FIG.2

FIG.3